# EUROPEAN PATENT SPECIFICATION

(11) **EP 2 546 369 B1**
(45) Date of publication and mention of the grant of the patent: **10.01.2018**
(21) Application number: 11753185.5
(22) Date of filing: 23.02.2011
(51) Int. Cl.: C22B 9/16, B41N 1/08, B41N 3/00, C22B 21/00, F27B 3/10, F27B 3/20, F27D 7/06

(54) **METHOD FOR MELTING RECOVERED PRINTING PLATES AND METHOD FOR RECYCLING**
VERFAHREN ZUM SCHMELZEN ZURÜCKGEWONNENER DRUCKPLATTEN UND VERFAHREN ZUM RECYCELN
PROCÉDÉ DE FUSION DE PLAQUES D'IMPRESSION RÉCUPÉRÉES, ET PROCÉDÉ DE RECYCLAGE

(30) Priority: 10.03.2010 JP 2010053254
(43) Date of publication of application: 16.01.2013
(73) Proprietor: FUJIFILM Corporation, Tokyo 106-8620 (JP)
(72) Inventor: OSADA, Masakazu, Haibara-gun Shizuoka 421-0396 (JP); YAMAZAKI, Toru, Haibara-gun Shizuoka 421-0396 (JP)
(74) Representative: Hoffmann Eitle
(86) International application number: PCT/JP2011/053945
(87) International publication number: WO 2011/111525

(56) References cited:
- WO-A1-2009/084568
- JP-A- 2002 225 449
- JP-A- 2007 063 583
- JP-A- 2007 224 391
- JP-A- 2009 237 819

## Description

### {Technical Field}

The present invention relates to a melting method and a recycling method for collected printing plates, and in particular to a technique to improve a melting yield when collected printing plates are directly melted in a pre-rolling melting furnace in an aluminum rolling company.

### {Background Art}

A lithographic printing plate is manufactured by forming a plate making layer (for example, a photosensitive layer) on a roughened, aluminum support for a lithographic printing plate. Roughening methods include mechanical roughening, electrochemical roughening, chemical roughening (chemical etching), and combinations thereof, and a highly pure fresh ingot needs to be used as an aluminum raw material when the surface of the support is uniformly and finely roughened, and the content of trace metals, such as Si, Fe, Cu, and Mn, needs to be strictly adjusted.

Conventionally, therefore, it is difficult to use used lithographic printing plates (aluminum scraps) as an aluminum raw material for the support for a lithographic printing plate, and in reality the used lithographic printing plates (aluminum scraps) are recycled as a raw material for applications in which a content tolerance of trace metals is large, for example, for a window sash, an automotive engine, or a vehicle wheel.

Manufacture of 1 kg (one kilogram) of fresh ingot, however, requires large energy such as 140.9 MJ, where a CO₂ emission amount which causes global warming is very large such as 9.22 kg per 1 kg ingot. On the other hand, when used lithographic printing plates which were used for printing or collected scraps such as offcuts which were generated in the course of manufacture of lithographic printing plates are used as raw materials, the energy for manufacturing 1 kg of recycled ingot is approximately 4% when the energy for manufacturing one kg of fresh ingot is assumed to be 100%, and the amount of CO₂ emission in manufacturing such a recycled ingot is also very small such as approximately 4% of the amount of CO₂ emission in manufacturing a fresh ingot.

In order to manufacture an aluminum raw material for a support for a lithographic printing plate with low energy, therefore, it is important to recycle collected printing plates as recycling materials.

In recent years, remelting collected printing plates to recycle the collected printing plates as an aluminum raw material for a support for a lithographic printing plate has been discussed, which is shown, for example, in Patent Document 1.

In Patent Document 1, a recycled ingot is made by melting collected printing plates, and an precursor for a support for a lithographic printing plate is then manufactured by mixing this recycled ingot in a fresh ingot, melting the mixture and rolling it into a thin plate.

Patent Document 2 discloses a method for the quality assurance of a reproduction lump, wherein an intact planography block and a used planography block are molten and cast in predetermined form.

### {Citation List}

### {Patent Literature}

Patent Document 1: WO 2009/084568
Patent Document 2: JP 2009 237819 A

### {Summary of the Invention}

### {Technical Problem}

However, when collected printing plates are melted in order to make a recycled ingot and the recycled ingot and a fresh ingot are further melted like Patent Document 1, it means that melting is performed twice, which causes a problem of energy inefficiency. Therefore, by melting collected printing plates directly in a pre-rolling melting furnace in an aluminum rolling company, the energy efficiency is significantly improved.

However, a collected printing plate, in particular, a used lithographic printing plate has an area approximately equal to the area of a sheet of newspaper and has a thin-plate-like shape (approximately 0.1 to 0.4 mm). Since the lithographic printing plate has a large surface area, oxidative loss due to combustion or the like becomes very large when the lithographic printing plate is directly melted in a pre-rolling melting furnace in an aluminum rolling company. It should be noted that directly melting collected printing plates without making a recycled ingot from the collected printing plates is referred to as "direct melting".

As a result, there is the problem that when melting a recycled ingot, a melting yield of approximately 97% is achieved, which is nearly equal to the melting yield of a fresh ingot; however, when melting collected printing plates, a melting yield of just approximately an 80% to 85% is achieved. Furthermore, since the pre-rolling melting furnace is designed to melt an ingot, such as a recycled ingot or a fresh ingot, which requires high melting temperature, the melting furnace is of a direct burner flame heating type to melt an ingot by direct burner flame. Therefore, directly melting collected printing plates without making a recycled ingot from the collected printing plates further facilitates oxidation, which results in melting yield degradation.

The present invention has been made in view of these circumstances, and the present invention aims to provide a melting method and a recycling method for collected printing plates, where oxidation loss can be reduced even if collected printing plates are directly melted together with fresh ingots, so that a high melting yield approximately equal to the melting yield in the case of melting a recycled ingot can be obtained.

### {Solution to Problem}

In order to achieve the above object, a melting method for collected printing plates according to the present invention is a melting method for melting collected printing plates which melts collected printing plates and fresh ingots by a burner in a melting furnace, the collected printing plates which are collected used lithographic printing plates and/or scraps including offcuts of lithographic printing plates, the method comprising: a first injection step of firstly injecting the collected printing plates in the melting furnace to form a pile of the collected printing plates on a hearth of the melting furnace; a second injection step of injecting the fresh ingots on the pile of the collected printing plates so as to cover the pile and not to expose, and a melting of the fresh ingots by exposing to flames of the burner.

According to the melting method of the present invention, the collected printing plates, which have thin-plate-like shape having a large surface area and are easily oxidized, are covered with the fresh ingots, which are difficult to oxidize because of its shape, and then the fresh ingots are melted is exposed to flames of the burner to be melted. This causes firstly the fresh ingot to melt into molten metal, and then the collected printing plates are indirectly melted by the molten metal. Further, the collected printing plates are melted in a state where the collected printing plates are soaked (immersed) in molten metal of the fresh ingots, and therefore the collected printing plates can be prevented from coming into contact with air during melting. Thus, oxidation loss can be significantly reduced even in the case of melting the easy-to-oxidize collected printing plates.

In present invention, the melting furnace is preferably a pre-rolling melting furnace of an aluminum rolling company. In the pre-rolling melting furnace of an aluminum rolling company, the content of trace metals in an aluminum sheet to be manufactured is required to be adjusted according to the intended purpose of the aluminum sheet. Therefore, it is necessary to melt the collected printing plates together with the fresh ingots, and thus the present invention can be effectively used.

In the present invention, the oxygen concentration in the melting furnace during the melting is preferably 11% or less, more preferably 6% or less.

Methods for making an 11% or less oxygen concentration in the melting furnace include air-fuel ratio control or smoke ventilation control. That is, it is preferred that an air-fuel ratio which is a ratio of an air flow rate to a fuel flow rate of the burner, is controlled so as not to generate excess oxygen in the furnace.

By controlling the air-fuel ratio to come as close to a theoretical air-fuel ratio as possible so as to prevent excess oxygen from being generated in the furnace, the oxygen concentration in the melting furnace can be made low, and thus the oxidation loss during melting can be further reduced.

Further, in the present invention, it is preferred that the melting furnace has an airtight structure having a chimney provided with a damper, and smoke ventilation control is performed by opening and closing the damper so as to make the internal pressure in the melting furnace higher than the external pressure thereof.

Since the melting furnace has an airtight structure, and smoke ventilation control is performed such that the internal pressure of the melting furnace becomes higher than the external pressure thereof, air is prevented from entering the melting furnace from outside of the melting furnace, and therefore the oxygen concentration in the melting furnace can be made low. This makes it possible to further reduce the oxidation loss during melting.

In order to achieve the above object, a recycling method for recycling collected printing plates which are collected used lithographic printing plates and/or scraps including offcuts of lithographic printing plates to reuse the collected printing plates as aluminum raw material for a support for a lithographic printing plate, comprising melting the collected printing plates and fresh ingots in a pre-rolling melting furnace using the melting method according to the above melting method without making the collected printing plates as a recycled ingot.

According to the recycling method of the present invention, a high melting yield can be obtained, unlike a conventional method, without making the collected printing plates into a recycled ingot and then melting the recycled ingot in a pre-rolling melting furnace of an aluminum rolling company. This makes it possible to omit a conventional step of temporarily recycling the collected printing plates into recycled ingots, thereby melting of the collected printing plates is performed only once in the pre-rolling melting furnace. Therefore, the energy efficiency of recycling the collected printing plates into aluminum raw material for a support for a lithographic printing plate can be remarkably improved.

### {Advantageous Effects of Invention}

According to the melting method and the recycling method for collected printing plates of the present invention, since the oxidation loss can be reduced even if the collected printing plates are directly melted together with the fresh ingots, a high melting yield approximately equal to a melting yield obtained in the case of melting the recycled ingots can be obtained. This makes it possible to omit a conventional step of temporarily making the collected printing plates into recycled ingots, thereby melting the collected printing plates only once in a pre-rolling melting furnace. Therefore, the energy efficiency of recycling the collected printing plates into aluminum raw material for a support for a lithographic printing plate can be remarkably improved.

### {Brief Description of Drawings}

Fig. 1 is an illustrative drawing for illustrating a melting method for collected printing plates according to an embodiment of the present invention;
Fig. 2 is an illustrative drawing for use in comparison with the melting method of the embodiment;
Fig. 3 is an illustrative drawing for illustrating a method for recycling collected printing plates according to the present invention; and
Fig. 4 is an illustrative drawing for illustrating a conventional method for recycling collected printing plates.

### {Description of Embodiments}

Hereinafter, preferred embodiments of a melting method and a recycling method for collected printing plates of the present invention will be described in detail.

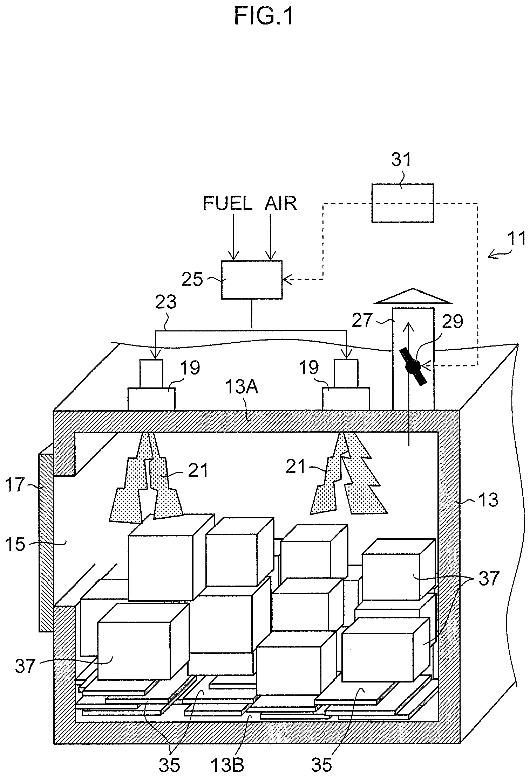

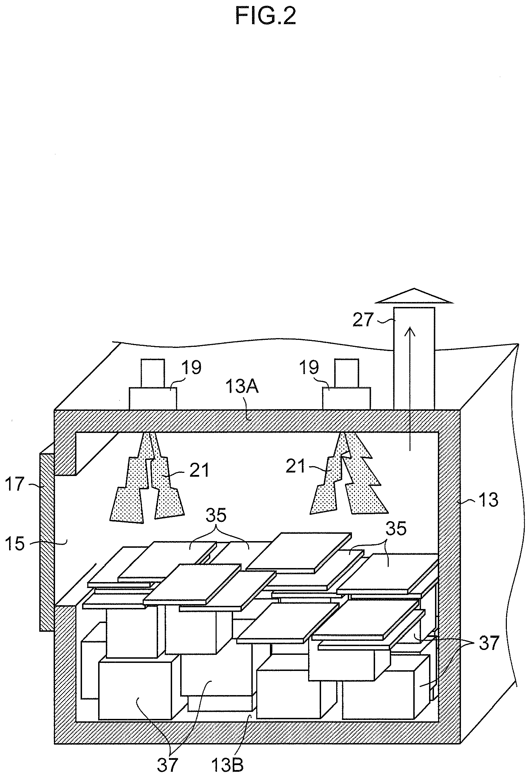

Fig. 1 is an illustrative drawing conceptually showing a melting method for collected printing plates in accordance with an embodiment of the present invention, and Fig. 2 is an illustrative drawing for use in comparative explanation with the present invention.

As shown in Fig. 1, a melting apparatus 11 has a slot 15 through which an object to be melt is inserted is opened in a side wall of a melting furnace 13, and the slot 15 is provided with an opening-and-closing door 17. In this case, it is preferred that the slot 15 is provided with a packing and the opening-and-closing door 17 has a seal structure.

A plurality of burners 19 are attached to a ceiling 13A of the melting furnace 13, and flames 21 blast out from the burners 19 melt the object to be melt put in the melting furnace 13. The burners 19 are fed with fuel and air through piping 23, and in the middle of the piping 23, an air-fuel ratio control device 25 which controls an air-fuel ratio which is a ratio between fuel and air is provided.

A chimney 27 is attached to the ceiling 13A of the melting furnace 13 so that smoke generated by melting is discharged. The chimney 27 is provided with a damper 29, by which the opening area of the chimney 27 can be varied so that the volume of discharged smoke can be controlled.

The burners 19 and the damper 29 are connected to a controller 31 by a signal cable or wirelessly, and the air-fuel ratio of the burner 19 and the volume of discharged smoke of the damper 29 are controlled by the controller 31.

Next, using the melting apparatus 11 thus configured, the melting method for collected printing plates of the present invention will be described.

Collected printing plates 35 and fresh ingots 37, which are the objects to be melted, are put in the melting furnace 13 through the slot 15. Here, a collected printing plate 35 means a used lithographic printing plate which has been used in printing and/or scraps such as offcuts of a lithographic printing plate that are generated in the course of manufacture of a lithographic printing plate.

When injecting (putting in) the objects to be melted, first, the collected printing plates 35, each of which has a large surface area and is thus easily oxidized, are put in the melting furnace 13 such that a pile of the collected printing plates 35 is formed on a hearth 13B (first injection step).

Next, the fresh ingots 37 are put in on the pile of the collected printing plates 35 such that the fresh ingots 37 cover the pile so as not to expose the pile substantially (second injection step).

Though, in Fig. 1, for the purpose of easy-to-understand description, the collected printing plates 35 is exposed, in reality the collected printing plates 35 are covered with the fresh ingots 37 so as not to be substantially exposed. It should be noted that the condition that the pile is not substantially exposed does not mean that the pile is essentially required to be covered completely, but means that the pile is just required to be covered apparently. The individual fresh ingot 37 is, preferably, a relatively small ingot having a weight of approximately 5 to 10 kg. This is not only because smaller ingots are less likely to damage the hearth 13b when injecting, but also because smaller ingots can easily cover the pile of the collected printing plates 35 so as not to expose. In this state the fresh ingots 37 are the melted by the flames 21 of the burners 19.

This causes the fresh ingots 37, each of which has a small surface area and is thus difficult to oxidize, to melt into molten metal, and the molten metal indirectly melts the collected printing plates 35. Accordingly, even a thin collected printing plate which has a large surface area and is thus easily oxidized can be effectively inhibited from oxidizing during melting, and therefore the oxidation loss of the collected printing plates 35 can be significantly reduced.

On the other hand, as shown in Fig. 2, in a case where the fresh ingots 37 are first put in the melting furnace 13 such that a pile of the fresh ingots 37 is formed, and the collected printing plates 35 are then put in so as to cover the pile of the fresh ingots 37, the easy-to-oxidize collected printing plates 35 directly contact with (are exposed to) the flames 21 of the burners 19. This facilitates formation of aluminum oxide, and therefore the oxidation loss of the collected printing plates 35 increases significantly.

Actually, when the melting method of the present invention in Fig. 1 and the melting method in Fig. 2 were performed with the same blend ratio of the fresh ingots 37 to the collected printing plates 35, the melting yield obtained by the melting method in Fig. 2 was 80% to 85%, whereas the melting yield obtained by the melting method in Fig. 1 was 88% to 95%. It should be noted that, in a case where the collected printing plates 35 and the fresh ingots 37 are randomly put in the melting furnace 13, the percentage of exposure of the collected printing plates 35 to air is high, as compared with the melting method of the present invention, and therefore the oxidation loss also increases.

Further, in order to further improve the melting yield, the oxygen concentration in the melting furnace 13 during melting is preferably 11% or less, more preferably 6% or less.

As a method for suppressing the oxygen concentration in the melting furnace 13 to 11% or less, air-fuel ratio control and smoke ventilation control are preferred.

That is, the controller 31 controls the air-fuel ratio control means 25 so as not to generate excess oxygen in the melting furnace 13. Thus, by performing air-fuel ratio control to make the air-fuel ratio as close to a theoretical air-fuel ratio as possible so as to prevent excess oxygen from being generated in the melting furnace 13, the oxygen concentration in the melting furnace 13 can be made low.

Further, the controller 13 controls the damper 29 provided in the chimney 27 so as to perform smoke ventilation control to make the internal pressure of the melting furnace 13 higher than the external pressure thereof. This can prevent air from entering the melting furnace 13 from outside of the melting furnace 13, and therefore the oxygen concentration in the melting furnace 13 can be made low.

Therefore, by performing the air-fuel ratio control and the smoke ventilation control, the oxidation loss of the collected printing plates 35 can be further reduced.

Next, a recycling method for collected printing plates of the present invention will be described in comparison with a conventional recycling method therefor.

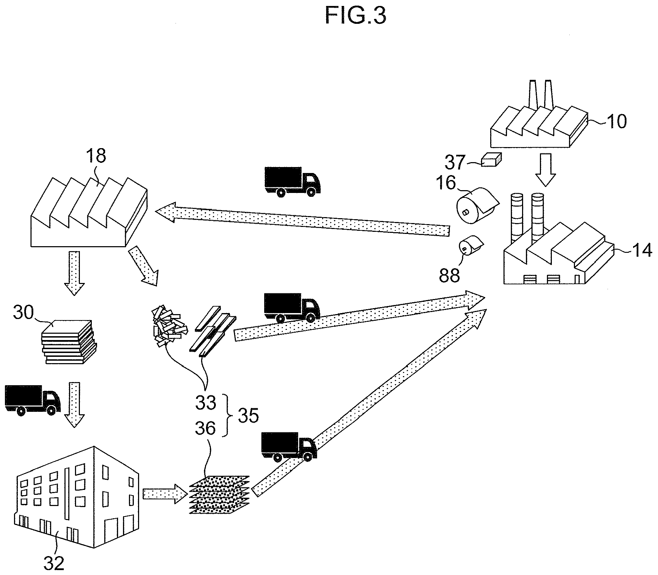

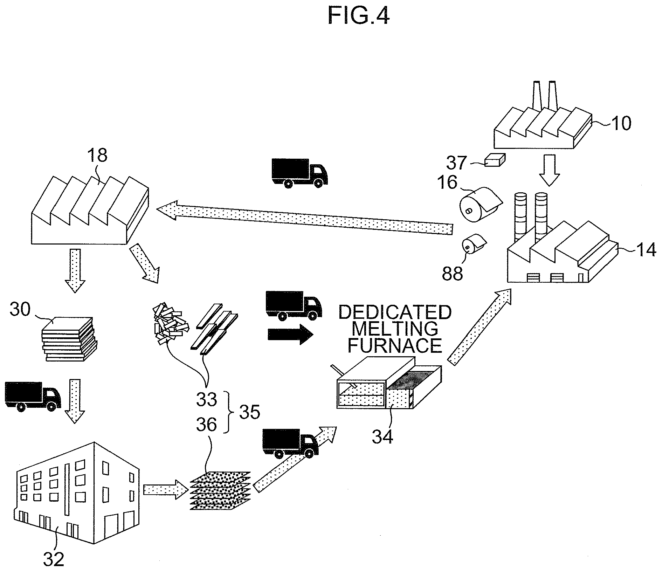

Fig. 3 shows a recycle loop of the present invention, in which a collected printing plate is recycled to be reused as an aluminum raw material for a support for a lithographic printing plate, and Fig. 4 shows a conventional recycle loop.

As shown in Figs. 3 and 4, in an aluminum smelting plant 10, an aluminum fresh ingot 37 is manufactured from bauxite. The aluminum purity of the aluminum fresh ingot 37 is preferably 99.7% or more.

Next, the aluminum fresh ingot 37 is melt into molten metal in a pre-rolling melting furnace, and then hot-rolled and cold-rolled in an aluminum rolling mill 14. As the pre-rolling melting furnace, a known one can be used. Thus, an aluminum sheet 16 made from 100% fresh ingots is manufactured as a roll body wound in a coil shape. The start temperature of hot rolling is preferably in a range of 350 to 500 °C. An intermediate annealing process may be performed before, after, or in the course of hot rolling, but, in view of inhibiting generation of CO₂, the intermediate annealing process is preferably omitted. The thickness of the aluminum sheet obtained by rolling is preferably 0.1 to 0.4 mm. It should be noted that after rolling the flatness of the aluminum sheet may be improved by a correction apparatus, such as a roller leveler or a tension leveler after the rolling process.

Then, the aluminum sheet 16 that has been subjected to rolling or the like is delivered in the state of an aluminum coil wound in a coil shape to a lithographic printing plate manufacturing factory 18.

In the lithographic printing plate manufacturing factory 18, a support for a lithographic printing plate is manufactured by performing surface-roughening process, anode oxidizing process, and the like on the aluminum sheet 16. Next, at a step of forming a plate forming layer, an application liquid for a photosensitive layer is applied to a surface-roughened surface of the support for a lithographic printing plate, and dried to form a photosensitive layer at a drying step. Since a strip-like precursor of a lithographic printing plate is thus manufactured, a lithographic printing plate with inserting paper is manufactured at a processing step by cutting the strip-like precursor laminated with strip-like inserting paper into a rectangular sheet having predetermined dimensions. Since scraps 33 (thin plates, approximately 1 to 60 cm on a side) such as offcuts of the strip-like precursor, are generated at the processing step of the strip-like precursor, they are collected in the lithographic printing plate manufacturing factory 18.

On the other hand, the lithographic printing plates 30 delivered to a printing company 32 are subjected to image exposure and development, and then mounted on a printing machine for use in printing. Then, the lithographic printing plates 36 that have been used in printing are collected as recycled materials in the printing company 32.

The route up to this step is the same in both the recycling method of the present invention and the conventional recycling method. In the recycling method of the present invention, however, the used lithographic printing plates 36 collected in the printing company 32, and collected printing plates 35 such as the scraps 33 collected in the lithographic printing plate manufacturing factory 18 are directly delivered to the aluminum rolling mill 14 without passing through a recycling plant 34 (see Fig. 4), unlike the conventional method.

Then, the collected printing plates 35 are directly melted together with the fresh ingots 37 in the pre-rolling melting furnace of the aluminum rolling mill 14 without making the collected printing plates 25 as a recycled ingot, and then a coil-shaped roll 88 of a recycled aluminum sheet is manufactured. To such direct melting, the above-described melting method of the present invention is applied. This makes it possible to obtain a high melting yield even without making recycled ingots, unlike the conventional method, and therefore the collected printing plates 35 can be recycled in one melting in the pre-rolling melting furnace.

On the other hand, the conventional recycling method shown in Fig. 4 has low energy efficiency since the collected printing plates 35 must be melted twice, once in the recycling plant 34 and once in the aluminum rolling mill 14.

Therefore, the recycling method for collected printing plates of the present invention can remarkably improve the energy efficiency of recycling the collected printing plates 35 as aluminum raw material for a support for a lithographic printing plate.

Thus, the recycling method for collected printing plates of the present invention not only can reduce energy costs for melting, but also can reduce transport costs since the recycling plant 34 is not involved, and therefore a recycling system that requires lower costs than a conventional recycling system can be established.

### {Reference Signs List}

10: Aluminum smelting plant, 11: Melting furnace, 17: Opening-and-closing door, 12: Aluminum fresh ingot, 13: Melting furnace, 14: Aluminum rolling mill, 15: Slot, 16: Aluminum sheet made from 100% fresh ingots, 17: Opening-and-closing door, 18: Lithographic printing plate manufacturing factory, 19: Burner, 21: Flame, 23: Piping, 25: Air-fuel ratio control device, 27: Chimney, 29: Damper, 30: Lithographic printing plate, 31: Controller, 32: Printing company, 33: Scraps, 34: Recycling plant, 35: Collected printing plates (used lithographic printing plates and scraps), 36: Used lithographic printing plates, 37: Fresh ingot.

## Claims

1. A melting method for melting collected printing plates which melts collected printing plates (35) and fresh ingots (37) by a burner (19) in a melting furnace (11), the collected printing plates (35) which are collected used lithographic printing plates (36) and/or scraps including offcuts (33) of lithographic printing plates, the method comprising:
a first injection step of firstly injecting the collected printing plates (35) in the melting furnace (11) to form a pile of the collected printing plates (35) on a hearth of the melting furnace (11);
a second injection step of injecting the fresh ingots (37) on the pile of the collected printing plates so as to cover the pile and not to expose; and
a melting step of melting the fresh ingots (37) by exposing the fresh ingots (37) to flames (21) of the burner (19).

2. The melting method for collected printing plates (35) according to claim 1, wherein the melting furnace (11) is a pre-rolling melting furnace of an aluminum rolling company.

3. The melting method for collected printing plates (35) according to claim 1 or 2, wherein an oxygen concentration in the melting furnace (11) during the melting step is 11% or less.

4. The melting method for collected printing plates (35) according to claim 3 wherein the oxygen concentration is 6% or less.

5. The melting method for collected printing plates (35) according to any one of claims 1 to 4, wherein
the melting furnace (11) has an airtight structure having a chimney (27) provided with a damper (29), and
smoke ventilation control is performed by opening and closing the damper (29) so as to make an internal pressure in the melting furnace (11) higher than an external pressure of the melting furnace (11).

6. A recycling method for recycling collected printing plates (35) which are collected used lithographic printing plates (36) and/or scraps including offcuts of lithographic printing plates to reuse the collected printing plates (35) as aluminum raw material for a support for a lithographic printing plate, comprising
melting the collected printing plates (35) and fresh ingots (37) in a pre-rolling melting furnace (11) using the melting method according to any one of claims 1 to 5 without making the collected printing plates (35) as a recycled ingot.

## Patentansprüche

1. Schmelzverfahren zum Schmelzen gesammelter Druckplatten, bei dem gesammelte Druckplatten (35) und frische Barren (37) mittels eines Brenners (19) in einem Schmelzofen (11) geschmolzen werden, wobei die gesammelten Druckplatten (35) gesammelte gebrauchte lithographische Druckplatten (36) und/oder Schrotte sind, die abgeschnittene Stücke (33) von lithographischen Druckplatten einschließen, das Verfahren umfassend:
einen ersten Einbringschritt, bei dem zuerst die gesammelten Druckplatten (35) in den Schmelzofen (11) eingebracht werden, um einen Stapel gesammelter Druckplatten (35) im Feuerungsabschnitt des Schmelzofens (11) zu bilden;
einen zweiten Einbringschritt, bei dem frische Barren (37) so eingebracht werden, dass sie den Stapel der gesammelten Druckplatten bedecken, ohne dass der Stapel freiliegt, und
einen Schmelzschritt, bei dem die frischen Barren (37) geschmolzen werden, indem die frischen Barren (37) den Flammen (21) des Brenners (19) ausgesetzt werden.

2. Schmelzverfahren für gesammelte Druckplatten (35) gemäß Anspruch 1, wobei der Schmelzofen (11) ein Vorwalzschmelzofen eines Aluminiumwalzwerks ist.

3. Schmelzverfahren für gesammelte Druckplatten (35) gemäß Anspruch 1 oder 2, wobei die Sauerstoffkonzentration im Schmelzofen (11) während des Schmelzschritts 11% oder weniger beträgt.

4. Schmelzverfahren für gesammelte Druckplatten (35) gemäß Anspruch 3, wobei die Sauerstoffkonzentration 6% oder weniger beträgt.

5. Schmelzverfahren für gesammelte Druckplatten (35) gemäß einem der Ansprüche 1 bis 4, wobei
der Schmelzofen (11) eine luftdichte Struktur mit einem Schornstein (27), der mit einer Klappe (29) versehenen ist, aufweist und
die Rauchentlüftung durch Öffnen und Schließen der Klappe (29) gesteuert wird, um zu erreichen, dass der Innendruck des Schmelzofens (11) höher ist als der Außendruck des Schmelzofens (11).

6. Recyclingverfahren zum Recyceln gesammelter Druckplatten (35), die gesammelte gebrauchte lithographische Druckplatten (36) und/oder Schrotte sind, die abgeschnittene Stücke von lithographischen Druckplatten einschließen, um die gesammelten Druckplatten (35) als Aluminiumrohmaterial für einen Träger für lithographische Druckplatten wiederzuverwenden, das Verfahren umfassend:
Schmelzen der gesammelten Druckplatten (35) und frischer Barren (37) in einem Vorwalzschmelzofen (11) unter Verwendung des Schmelzverfahrens gemäß einem der Ansprüche 1 bis 5, ohne recycelte Barren aus den gesammelten Druckplatten (35) herzustellen.

## Revendications

1. Procédé de fusion pour faire fondre des plaques d'impression collectées qui fait fondre les plaques d'impression collectées (35) et des lingots nouveaux (37) par un brûleur (19) dans un four de fusion (11), les plaques d'impression collectées (35) qui sont des plaques d'impression lithographique usagées (36) et/ou des déchets incluant des chutes (33) de plaques d'impression lithographique collectées, le procédé comprenant :
une première étape d'injection pour injecter premièrement les plaques d'impression collectées (35) dans le four de fusion (11) pour former une pile des plaques d'impression collectées (35) sur un foyer du four de fusion (11) ;
une deuxième étape d'injection pour injecter les lingots nouveaux (37) sur la pile des plaques d'impression collectées de sorte à couvrir la pile et à ne pas l'exposer ; et
une étape de fusion pour faire fondre les lingots nouveaux (37) en exposant les lingots nouveaux (37) aux flammes (21) du brûleur (19).

2. Procédé de fusion pour plaques d'impression collectées (35) selon la revendication 1, dans lequel le four de fusion (11) est un four de fusion de pré-laminage d'une entreprise de laminage d'aluminium.

3. Procédé de fusion pour plaques d'impression collectées (35) selon la revendication 1 ou 2, dans lequel une concentration en oxygène dans le four de fusion (11) pendant l'étape de fusion est de 11 % ou moins.

4. Procédé de fusion pour plaques d'impression collectées (35) selon la revendication 3, dans lequel la concentration en oxygène est de 6 % ou moins.

5. Procédé de fusion pour plaques d'impression collectées (35) selon l'une quelconque des revendications 1 à 4, dans lequel
le four de fusion (11) a une structure étanche ayant une cheminée (27) pourvue d'un clapet (29), et
le contrôle de la ventilation de la fumée est effectué en ouvrant et en fermant le clapet (29) de façon à créer une pression interne dans le four de fusion (11) supérieure à une pression externe du four de fusion (11).

6. Procédé de recyclage pour recycler des plaques d'impression collectées (35) qui sont des plaques d'impression lithographique usagées (36) et/ou des déchets incluant des chutes de plaques d'impression lithographiques collectés pour réutiliser les plaques d'impression collectées (35) comme matière première d'aluminium pour un support pour une plaque d'impression lithographique, comprenant
faire fondre les plaques d'impression collectées (35) et les lingots nouveaux (37) dans un four de fusion de pré-laminage (11) en utilisant le procédé de fusion selon l'une quelconque des revendications 1 à 5 sans faire des plaques d'impression collectées (35) un lingot recyclé.
